# EUROPÄISCHE PATENTSCHRIFT

(11) **EP 1 497 960 B1**
(45) Veröffentlichungstag und Bekanntmachung des Hinweises auf die Patenterteilung: **15.03.2006**
(21) Anmeldenummer: 03722280.9
(22) Anmeldetag: 04.04.2003
(51) Int. Cl.: H04L 12/56

(54) **VERFAHREN ZUR VERVIELFÄLTIGUNG UND VERTEILUNG VON INFORMATIONEN ZUR IDENTIFIZIERUNG VON PROFILEN VON TEILNEHMERN EINES KOMMUNIKATIONSSYSTEMS**
METHOD FOR DUPLICATING AND DISTRIBUTING INFORMATION FOR IDENTIFYING PROFILES OF SUBSCRIBERS OF A COMMUNICATION SYSTEM
PROCEDE DE REPRODUCTION ET REPARTITION D'INFORMATIONS POUR L'IDENTIFICATION DE PROFILS D'ABONNES D'UN SYSTEME DE COMMUNICATION

(30) Priorität: 19.04.2002 DE 10218808
(43) Veröffentlichungstag der Anmeldung: 19.01.2005
(73) Patentinhaber: SIEMENS AKTIENGESELLSCHAFT, 80333 München (DE)
(72) Erfinder: ENDERLEIN, Janos-Gerold, 10115 Berlin (DE)
(86) Internationale Anmeldenummer: PCT/DE2003/001235
(87) Internationale Veröffentlichungsnummer: WO 2003/090415

(56) Entgegenhaltungen:
- WO-A-98/48969
- DE-A- 3 922 677
- US-A- 5 086 394
- MARTIN KROPAT ET AL: "Mobile Dating" SIEMENS TECHNIK REPORT, Bd. 2, Nr. 3, April 1999 (1999-04), Seite 122 XP007001828

## Beschreibung

Die vorliegende Erfindung betrifft ein Verfahren zur Vervielfältigung und Verteilung von Informationen zur Identifizierung von Profilen von Teilnehmern eines Kommunikationssystems, insbesondere eines drahtlosen Kommunikationssystems. Bei der Suche nach bestimmten Angebots- und Nachfrageprofilen ist es oft wünschenswert, zum einen vor der unmittelbaren Kontaktierung eines Teilnehmers mit einem bestimmten Profil eine anonyme Selektion unter verschiedenen zur Auswahl stehenden Profilen durchführen zu können, zum anderen gleichzeitig aber auch die Möglichkeit einer sofortigen persönlichen Kontaktaufnahme mit einem entsprechenden Teilnehmer zu haben. Bislang war es üblich, ein Angebot bzw. eine Nachfrage mittels konventioneller Medien wie beispielsweise Print (Annonce), Internet (z.B. Webpage), Mobilfunktechnologien, wie beispielsweise über Fragebögen von Anbietern, selbst zu verfassen. Dieses Angebot wurde dann manuell, teilautomatisiert oder vollautomatisch mit bereits hinterlegten Angeboten bzw. Nachfragen verglichen. Beispielhaft sei hier der kognitive Vergleich von Annoncen mit dem Wunschprofil des Suchenden, die Suche im Internet mit Suchmaschinen und der Einsatz von Suchrobotern genannt. Eine direkte sofortige Kontaktierung eines bestimmten Teilnehmers in Kombination mit einer anonymen Vorselektion war bislang nicht möglich. Wie bereits erwähnt, ist demnach ein Abgleich von Angebots- und Nachfrageprofilen durch lokal unbegrenzte Verbindung und Korrelation der übertragenen Profile, wie beispielsweise mittels Suchmaschinen im Intenet oder im Zellular-Netz bekannt. Ein Nachteil dieses Ansatzes ist die lokale "Unbegrenztheit" bei Applikationen, wie beispielsweise Partnersuche oder Bildung von Communities. Durch diesen Ansatz ergeben sich eine Vielzahl von nicht relevanten, da ad-hoc nicht verfügbaren Korrelationen.

Ferner ist es aus der DE 102 12 248 bekannt, einen Abgleich von Angebots- und Nachfrageprofilen durch lokal begrenzte ad-hoc Verbindungen und eine Korrelation der übertragenen Profile mittels drahtloser LAN (local area network)/PAN (personal area network) Technologie durchführen zu können. Ein Modul zur Bereitstellung drahtlos, lokal begrenzter LAN/PAN Netzwerktechnologie und zur Realisierung der Abgleichfunktionalität ist hierbei kombiniert mit einem Mobiltelefon. In dem Modul wird von einem ersten Teilnehmer ein Angebots-, Nachfrage- oder Interessenprofil definiert und gespeichert. Das Modul kontaktiert beispielsweise über den LAN/PAN Standard Bluetooth automatisch jedes weitere Modul, das sich in der Funkzelle befindet. Nach der Identifikation eines weiteren Moduls wird eine ad-hoc Verbindung zu diesem Modul aufgebaut und die Profile der entsprechenden Teilnehmer zu dem ersten Teilnehmer übermittelt. Es findet dann eine Korrelation der Profile statt. Eine vorher von dem Teilnehmer definierte Korrelationsschwelle entscheidet nach der Korrelation, ob beide Profile als ausreichend übereinstimmend gewertet werden sollen. Ist dies der Fall, so wird der Teilnehmer in geeigneter Form über ein positives Korrelationsergebnis informiert. Die abschließende persönliche Kontaktierung der Teilnehmer erfolgt durch Zuteilung von temporär gültigen Telefonnummern. Im umgekehrten Fall der nicht ausreichenden Übereinstimmung der Profile besteht keine Möglichkeit der Kontaktierung. Ein Nachteil dieses Ansatzes ist die starke lokale Begrenzung der ad-hoc Verbindung durch die limitierte Reichweite der verwendeten Netzwerk-Technologie, beispielsweise bei Bluetooth oder IEEE802.11 links. Die limitierte Reichweite der direkten LAN/PAN Verbindung verringert erheblich die Wahrscheinlichkeit einer stattfindenden positiven Korrelation, d.h. Korrelation bei Übereinstimmung der Profile.

Aus der DE 39 22 677 A1 ist ein Verfahren zur Identifizierung von Profilen von Teilnehmern eines Kommunikationssystems bekannt, bei dem in ein Kommunikationsendgerät eigene teilnehmerspezifische Profile eingegeben werden, von einem anderen Kommunikationsendgerät versendete teilnehmerspezifische Profile empfangen und gespeichert werden, die empfangenen Profile mit dem eigenen gespeicherten Profil gemäß einer profilspezifischen Korrelationsschwelle verglichen werden und ein Überschreiten der profilspezifischen Korrelationsschwellen den jeweiligen Teilnehmern der entsprechenden teilnehmerspezifischen Profile signalisiert wird. Außerdem ist aus der DE 39 22 677 A1 ein entsprechend ausgestaltetes Kommunikationsendgerät bekannt.

Aus der US 5,086,394 ist darüber hinaus ein Verfahren zur Identifizierung von Teilnehmern bekannt, bei dem auf einem zentralen Server von Teilnehmern gehörenden Kommunikationsendgeräten empfangene Profile untereinander verglichen werden und bei Profilübereinstimmungen von dem zentralen Server Mitteilungen an die betroffenen Kommunikationsendgeräte (Teilnehmer) versendet werden.

Es war somit eine Aufgabe der vorliegenden Erfindung ein Verfahren bereitzustellen, mit dessen Hilfe es für einen Teilnehmer eines Kommunikationssystems möglich ist, einfach und schnell Angebots- und Nachfrageprofile anderer Teilnehmer des Kommunikationssystems in einem für eine direkte persönliche Kontaktierung räumlich und zeitlich interessanten Bereich zu identifizieren und gegebenenfalls sofort mit einem oder mehreren Teilnehmern Kontakt aufzunehmen.

Gelöst wird diese Aufgabe durch ein erfindungsgemäßes Verfahren gemäß Anspruch 1. Vorteilhafte Ausführungsformen sind in den Unteransprüchen aufgeführt.

Gemäß Anspruch 1 wird erfindungsgemäß ein Verfahren zur Vervielfältigung und Verteilung von Informationen zur Identifizierung von Profilen von Teilnehmern eines Kommunikationssystems bereitgestellt, bei dem
a. die Teilnehmer teilnehmerspezifische Profile über je eine Eingabeeinheit in je einem Kommunikationsgerät und/oder in je einem an je ein Kommunikationsgerät gekoppeltes Modul definieren und speichern,
b. mittels des je einen an je eines der Kommunikationsgeräte gekoppeltes Modul auf Basis einer drahtlosen, lokal begrenzten Netzwerk-Technologie Profile anderer Teilnehmer des Kommunikationssystems empfangen werden,
c. die empfangenen Profile mit dem in dem jeweiligen Kommunikationsgerät definierten und gespeicherten Profil gemäß einer profilspezifischen Korrelationsschwelle verglichen werden und
d. durch Aktivierung des Teilnehmers des jeweiligen Kommunikationsgeräts die empfangenen Profile in dem jeweiligen Kommunikationsgerät gespeichert und gemäß jeweiliger profilspezifischer Korrelationsschwellen untereinander verglichen werden und/oder
e. durch Aktivierung des Teilnehmers des jeweiligen Kommunikationsgeräts die empfangenen Profile in dem jeweiligen Kommunikationsgerät gespeichert und bei Ortswechsel des jeweiligen Kommunikationsgerätes und/oder bei Fortschreiten der Zeit gemäß der jeweiligen profilspezifischen Korrelationsschwellen mit Profilen verglichen werden, die mittels des einen an das jeweilige Kommunikationsgerät gekoppelten Moduls auf Basis einer drahtlosen, lokal begrenzten Netzwerk-Technologie aufgrund des Ortswechsels und/oder des Fortschreitens der Zeit neu empfangen und gespeichert werden und
f. ein jeweiliges Überschreiten der profilspezifischen Korrelationsschwellen den jeweiligen Teilnehmern der entsprechenden teilnehmerspezifischen Profile mitgeteilt wird und
g. dass durch Aktivierung des Teilnehmers des jeweiliges Kommunikationsendgeräts die empfangenen und gemäß der jeweiligen profilspezifischen Korrelationsschwellen gespeicherten Profile mittels des einen an das jeweilige Kommunikationsendgerät gekoppelten Moduls auf Basis einer drahtlosen, lokal begrenzten Netzwerk-Technologie an andere Teilnehmer des Kommunikationssystems weitervermittelt werden.

Bei der Eingabeeinheit kann es sich dabei beispielsweise um eine Tastatur eines mobilen Kommunikationsgerätes, wie beispielsweise eines Mobiltelefons, oder um eine Tastatur einer Rechnereinheit, wie beispielsweise eines Personal Computers (PC) handeln. Eine weitere Möglichkeit ist die Eingabe des Profils an einem externen Gerät, beispielsweise an einem Personal Computer (PC), und die Übertragung der Daten zum Kommunikationsgerät über eine drahtlose Schnittstelle, im Allgemeinen über eine Funk- oder eine Infrarot-Schnittstelle.

Das an ein Kommunikationsgerät gekoppelte Modul kann in das Kommunikationsgerät integriert sein und somit Bestandteil des Kommunikationsgerätes sein oder als externes Modul mit dem Kommunikationsgerät in Form eines sogenannten "plug on"-Moduls verbunden sein.

In einer bevorzugten Ausführungsform des erfindungsgemäßen Verfahrens werden Profile anderer Teilnehmer nur temporär in dem Kommunikationsgerät eines Teilnehmers gespeichert. Ist eine definierte Zeitdauer seit der Speicherung der jeweiligen Profile abgelaufen, so verlieren diese an Gültigkeit und werden automatisch gelöscht.

In einer bevorzugten Ausführungsform wird als drahtlose, lokal begrenzte Netzwerk-Technologie eine LAN-(local area network) und/oder eine PAN-(personal area network)Technologie verwendet. Besonders bevorzugt wird dabei eine Bluetooth-Technolgie verwendet. Unter der Bezeichnung Bluetooth wurden 1998 Spezifikationen von einer "Special Interest Group", bestehend aus Experten verschiedener Firmen, für ein lokales Datenfunksystem vorgestellt. In einem lizenzfreien Frequenzband 2,4GHz (ISM-Band) wird den Teilnehmern des Kommunikationssystems eine Übermittlungskapazität bis ca. 1 Mbit/s angeboten. Die Reichweite ist mit < 100 m gering und somit vorrangig ausgelegt für eine Kommunikation im lokalen Bereich. Im Rahmen der Erfindung eignet sich die Bluetooth-Technologie aus den im folgenden angeführten Gründen besonders gut:
1. die Bluetooth-Technologie wurde weltweit standardisiert, sie ist preiswert und stellt ein Massenprodukt dar,
2. sie lässt sich einfach in Kommunikationsgeräte mit zellularem Mobilfunkstandard, wie beispielsweise GSM, GPRS, EDGE, UMTS integrieren,
3. es entstehen keine Kosten für die Benutzung eines Funkkanals.

Ein Nachteil der Bluetooth-Technologie ist die bereits erwähnte Reichweitenbegrenzung, was bedeutet, dass zunächst nur die Geräte in der unmittelbaren Umgebung kontaktiert werden. Ein Verbreiten und Verteilen von Profilen in einem größeren, aber doch noch überschaubaren Bereich, wie beispielsweise in einem Stadtbereich, wird nun erfindungsgemäß dadurch erreicht, dass sogenannte "scattered" Netzwerke zur Informationsvervielfältigung und -verteilung genutzt werden. Im Rahmen der vorliegenden Erfindung werden als "scattered" Netzwerke Systeme bezeichnet, die aus zeitlich terminierten, nicht netzwerktechnisch organisierten, mobilen ad-hoc PAN/LAN Systemen bestehen. Diese Netzwerke entstehen durch zufällige Clusterung von mindestens 2 Teilnehmern durch ad-hoc Kontaktierung eines LAN/PAN Systems, das in eine Funkzelle eines weiteren LAN/PAN Systems eintritt. Verläßt eines dieser Systeme die Funkzelle, so wird das Netzwerk wieder terminiert. In "scattered" Netzwerken werden in der Zeit, in dem der Kontakt besteht, auch wenn dieser sehr kurz ist, bidirektional Daten ausgetauscht. Zunächst wird, wie bereits bekannt, eine ad-hoc Verbindung beispielsweise mittels Bluetooth-Technologie aufgebaut. Darüber wird ein Profil eines Teilnehmers zu einem anderen Teilnehmer übertragen. Gemäß dem Stand der Technik wird eine Korrelation zwischen den Profilen der Teilnehmer durchgeführt. Erfindungsgemäß wird ein Profil empfangen und durch Aktivierung seitens des empfangenden Teilnehmers gespeichert auch wenn keine positive Korrelation erfolgte. Man kann dies auf relevante Profile beschränken, die sich beispielsweise dadurch auszeichnen, dass der sich ergebende Korrelationswert nahe unterhalb der definierten, profilspezifischen Korrelationsschwelle liegt. Damit wird erfindungsgemäß eine Duplizierung eines Profils erwirkt. Die Mobilität der Teilnehmer bewirkt nun eine räumliche und zeitliche Verteilung und Verbreitung der gespeicherten Profile beispielsweise in andere, eventuell ähnliche soziale Gruppen. Damit erhöht sich die Wahrscheinlichkeit einer späteren positiven Korrelation. Derjenige Teilnehmer, der das Profil abgespeichert hat, dient als Vermittler. Der Teilnehmer soll aber erfindungsgemäß eine Wahl von Vermittlungs- bzw. Kommunikationsalternativen haben. Diese Alternativen gelten dabei bidirektional. Diese Kommunikationsalternativen können erfindungsgemäß wie folgt aussehen:
1. Der Teilnehmer sperrt bzw. aktiviert nicht eine Vermittlungsfunktion des Moduls seines Kommunikationsgerätes. Somit werden keine Profile gespeichert und über das eigene Modul ausgesendet. Darüber hinaus kann vorteilhafterweise von einem Teilnehmer festgelegt werden, dass das eigene ausgesendete Profil nicht von einem fremden Modul gespeichert und weitergegeben werden soll.
2. Der Teilnehmer aktiviert eine Vermittlungsfunktion des Moduls seines Kommunikationsgerätes für relevante Profile, wie beispielsweise für Profile, die nahe an der eigenen Korrelationsschwelle liegen. Diese werden gespeichert und über das Modul des Teilnehmers ausgesendet. Vorteilhafterweise soll das eigene Profil auch nur von anderen Modulen gespeichert und weitergegeben werden, die relevant im oben genannten Sinn sind.
3. Der Teilnehmer aktiviert uneingeschränkt die Vermittlungsfunktion des Moduls seines Kommunikationsgerätes für alle empfangenen Profile. Das bedeutet, dass alle Profile gespeichert werden und über das Modul ausgesendet werden. Eigene ausgesendete Profile sollen vorteilhafterweise dann auch von anderen Modulen uneingeschränkt gespeichert und weitergegeben werden.

Der Teilnehmer, der eine der Kommunikationsalternativen 2 oder 3 wählt, bestimmt vorzugsweise zusätzlich die Zeitdauer, in der das Profil gültig sein soll. Vorteilhafterweise ist sowohl die gewünschte Kommunikationsalternative wie auch die Zeitdauer Bestandteil des zu übertragenden Profils. Nach einer Übertragung eines derartigen Profils an ein Modul werden diese Informationen in diesem Modul gespeichert. Ist die Zeit der maximalen Gültigkeit erreicht, so wird sie von dem Modul gelöscht.

Die Informationen von einem Teilnehmer werden somit gegebenenfalls von einem anderen Teilnehmer weitergetragen. Die Informationsverteilung kann auch über mehrere Vermittlungsstufen erfolgen.

Teilnehmer, die ihre Profile vermitteln lassen , bestätigen gleichzeitig den Wunsch der Verbindungsaufnahme bei positiver Korrelation ihres Profils über einen Vermittler.

Als Alternative zu Bluetooth kann die IEEE 802.11b LAN Technologie verwendet werden. Weitere drahtlose Technologien für "Local- und Personal Area Network" Applikationen sind gegenwärtig in der Phase der Standardisierung.

Die verwendete Technologie ist dabei vorzugsweise mit einem mobilen, nach einem zellularen Standard funktionierenden Kommunikationsgerät (im Folgenden als zellulares Kommunikationsgerät bezeichnet) gekoppelt. Besonders bevorzugt handelt es sich dabei um ein mobiles Kommunikationsgerät nach dem GSM-, GPRS-, EDGE und/oder UMTS-Standard.

Zur Identifizierung von passenden Angebots- und Nachfrageprofilen wird von dem suchenden Teilnehmer beispielsweise mit Hilfe einer Kategorisierungs- und Beschreibungsvorschrift beispielsweise ein Objektangebots-, Nachfrage- oder Interessenprofil definiert und in geeigneter Form vorteilhaft im Modul oder Kommunikationsgerät gespeichert. Mit der standardisierten Kategorisierungsvorschrift wird beispielsweise die Art des Angebots- bzw. Nachfrageobjektes oder Interessengebietes beschrieben und mit der standardisierten, objekttypischen Beschreibungsvorschrift das Objekt selbst. Die Festlegung von standardisierten Vorschriften schafft die Möglichkeit von erfolgreichen Korrelationen. Ferner ist in jedem Profil eine profilspezifische Korrelationsschwelle definiert.

Das verwendete Modul kontaktiert auf Basis einer drahtlosen, lokal begrenzten Netzwerk-Technologie automatisch, ad hoc, jedes weitere Modul, das sich in derselben Funkzelle wie der suchende Teilnehmer selbst befindet. Es wird also eine direkte, bidirektionale Verbindung hergestellt. Nach der Identifizierung eines weiteren Moduls in der entsprechenden Funkzelle des Teilnehmers wird eine ad hoc Verbindung zu diesem Modul aufgebaut und nachfolgend, vorteilhafterweise bidirektional, die Profile der entsprechenden Teilnehmer zu dem suchenden Teilnehmer übermittelt. Nach dem Empfang der Daten findet eine Korrelation der Profile, vorteilhafterweise in beiden beteiligten Modulen, statt.

In einer bevorzugten Ausführungsform des erfindungsgemäßen Verfahrens wird jedem Modul eines Teilnehmers eine ID-Nummer zugeordnet. Vorteilhafterweise wird automatisch die vom Bluetooth-Standard unterstützte sogenannte Bluetooth Device-Adresse als ID-Nummer verwendet, die weltweit jedes Bluetooth Modul eineindeutig kennzeichnet. Die Module übertragen beispielsweise nach dem ersten Einschalten der Systeme ihre ID-Nummern über die vorzugsweise zellularen Kommunikationsgeräte zu einem zwischengekoppelten Anbieter bzw. Provider. Der Provider stellt damit eine eindeutige Zuordnung zwischen der ID-Nummer des Moduls und der Adressierung (Telefonnummer) des zellularen Kommunikationsgerätes her. Diese Zuordnung ist nur solange gültig wie das Modul nicht ausgetauscht wird. Wird ein anderes Modul an das Kommunikationsgerät angeschlossen, muss eine neue Zuordnung bei dem Provider stattfinden. Hierzu kann das oben erwähnte Verfahren genutzt werden. Die ID-Nummern werden ebenfalls zur Identifizierung der entsprechenden Module bidirektional bei der Kontaktierung zwischen je zwei Modulen übertragen.

Erfindungsgemäß wird ein Überschreiten profilspezifischer Korrelationsschwellen den jeweiligen Teilnehmern der entsprechenden teilnehmerspezifischen Profile mitgeteilt.

Für eine abschließende persönliche Kontaktierung der Teilnehmer, d.h. zur Herstellung einer direkten Kommunikationsverbindung, sind nunmehr im Sinne der vorliegenden Erfindung folgende Kriterien wichtig:
- Durch die verwendete Netzwerk-Technologie kann und soll keine direkte Sichtverbindung vorausgesetzt werden, was die Kontaktierung vereinfachen würde.
- Durch den Wunsch nach Diskretion darf es nicht zwingend erforderlich sein, eine direkte persönliche (Sicht-) Verbindung aufnehmen zu müssen bzw. erkannt zu werden. Ferner darf es nicht zwingend sein, die Verbindung zeitlich sofort aufnehmen zu müssen. Auch muss vermieden werden können, persönliche Angaben zur direkten Kontaktierung, wie Telefonnummer oder Adresse, preisgeben zu können.
- Der Teilnehmer hat volle Flexibilität zu einer Annahme oder einer Ablehnung einer persönlichen Kontaktierung bei vollem Schutz seiner Intimsphäre.

Soll eine direkte Kommunikationsverbindung hergestellt werden, so geschieht dies erfindungsgemäß durch eine jeweilige teilnehmerseitige geeignete Aktivierung. Eine derartige Aktivierung kann beispielsweise durch Drücken einer Taste am Modul oder an der Eingabeeinheit des Kommunikationsgerätes vorgenommen werden. Erfindungsgemäß wird dann zunächst automatisch eine Kommunikationsverbindung, vorzugsweise eine GSM-, GPRS-, EDGE- oder UMTS-Verbindung zu einem zwischengekoppelten Anbieter, einem sogenannten Provider, des Kommunikationssystems aufgebaut. Dieser zwischengekoppelte Anbieter bzw. Provider übernimmt die Organisation der Kontaktierung. Die Kontaktierung kann beispielsweise folgendermaßen organisiert sein:

Ein Modul eines Teilnehmers A übermittelt die ID-Nummer eines Moduls eines Teilnehmers B, den der Teilnehmer A kontaktieren möchte, mit einer Kontaktanforderung über das vorzugsweise zellulare Kommunikationsgerät zu dem zwischengekoppelten Anbieter bzw. Provider. Mit dieser, bei dem Anbieter hinterlegten ID-Nummer ist Teilnehmer B und das zugehörige Modul eindeutig identifizierbar. Der Anbieter bzw. Provider prüft, ob das Modul des Teilnehmers B bzw. der Teilnehmer B, mit dem der Teilnehmer A Kontakt aufnehmen möchte, ebenfalls im Rahmen eines zu definierenden Zeitfensters ein Interesse an einer Kontaktierung bekundet hat, nachdem ihm ebenfalls die ID-Nummer zusammen mit einer Kontaktanforderung übermittelt wurde. Ist dies nicht der Fall, so ist die direkte Kontaktierung nicht möglich. Je nach der Tarifgestaltung kann auch im Fall einer nicht erfolgreichen direkten Kontaktierung der Anbieter bzw. Provider vom Teilnehmer A eine Gebühr berechnen.

Hat Teilnehmer B ebenfalls Interesse an einer Kontaktaufnahme, so überträgt Teilnehmer B bzw. das Modul des Teilnehmers B die ID-Nummer von A zusammen mit einer Kontaktanforderung ebenfalls über das vorzugsweise zellulare Kommunikationsgerät an den Provider. Liegen beide Kontaktanforderungen und die ID-Nummern der Module in einem definierten Zeitfenster vor, so ist die Kontaktierung erfolgreich. Vorzugsweise wird zur Herstellung einer Kommunikationsverbindung zwischen den Teilnehmern A und B den Teilnehmern jeweils eine neutrale Telefonnummer zugewiesen. Dadurch wird die Möglichkeit geschaffen, dass beide Teilnehmer über neutrale Telefonnummern, die zum Schutze der Anonymität ungleich mit der persönlichen Telefonnummer sind, Kontakt aufnehmen können. Die neutralen Telefonnummern werden vorzugsweise temporär für ein zu bestimmendes Zeitfenster zugewiesen. Der Anbieter kann beispielsweise für jede erfolgreiche Kontaktierung von den Teilnehmern A und B eine Gebühr erheben, die beispielsweise in der Größenordnung einer heutigen SMS (short message service) Sendung liegt. Ein Kontakt ist somit erfolgreich hergestellt. Die Teilnehmer A und B können sich nunmehr mündlich verabreden.

In einer weiteren Anwendung der Erfindung kann einer der Teilnehmer ein stationärer oder mobiler Anbieter eines Produktes oder einer Dienstleistung sein. Entsprechend der gegebenen Beschreibung wird das Angebot bzw. die Nachfrage mit der beschriebenen Technologie jedem vorbeikommenden Teilnehmer in einem begrenzten Umkreis, wie beispielsweise in einem Stadtbereich kommuniziert. Entsprechend bekannter Terminologie kann dieser Service als "located based offer" oder "location based services" bezeichnet werden. Neben Informationen zur genauen örtlichen Beschreibung des Ortes, kann der Anbieter der Dienstleistung, bei Bestätigung des Interesses durch einen potentiellen Kunden, vorteilhaft weitere Informationen, wie beispielsweise Preise, über das Kommunikationsgerät zugesendet bekommen. Im Unterschied zur obigen Anwendung bestätigt der Anbieter der Dienstleistung die Korrelation vorteilhaft automatisch.

Ein Vorteil der vorliegenden Erfindung gegenüber bereits bestehenden und eingangs erwähnten Identifikationssystemen ist unter anderem darin zu sehen, dass eine räumlich sinnvolle, nicht über die alltägliche Aktionsradien von normalen Teilnehmern hinausgehende Ausweitung des Suchgebietes von Teilnehmern mit Angebots- und Nachfragewünschen erzielt wird. Es wird so eine Erhöhung der Wahrscheinlichkeit einer erfolgreichen Suche über den bislang bekannten Suchradius hinaus erreicht.

Ein weiterer Vorteil der vorliegenden Erfindung ist darin zu sehen, dass durch die Vervielfältigung der Anfrage bzw. Nachfrage Multiplikatoren generiert werden. Die zeitgleiche, räumlich getrennte Suche von mehreren Modulen erhöht die Wahrscheinlichkeit einer erfolgreichen Suche. Ferner wird eine gute Informationsverteilung in und zwischen Gruppen, beispielsweise mit ähnlichen Interessengebieten gesichert. Außerdem läßt sich ein gewisser Lerneffekt dahingehend nutzen, dass bei häufigem Empfang ähnlicher relevanter Profile Prioritäten oder Trends erkennbar werden.

Ein weiterer Vorteil der vorliegenden Erfindung ist darin zu sehen, dass die Suche nach einem passenden Profil örtlich und zeitlich ständig durchgeführt wird ohne dass der entsprechende Teilnehmer immer wieder tätig werden müsste. Das bedeutet, dass die Suche parallel zu einer anderen Geschäftstätigkeit erfolgt. Ferner ist die Suche, wie bereits erwähnt, diskret und anonym. Sie ist unverbindlich und persönlich steuerbar.

Die vorliegende Erfindung betrifft ferner ein Modul, das für das erfindungsgemäße Verfahren anwendbar ist und das in ein mobiles Kommunikationsgerät eines Teilnehmers integrierbar und/oder an ein mobiles Kommunikationsgerät eines Teilnehmers über eine Schnittstelle ankoppelbar ist und mindestens die folgenden Elemente aufweist:
A. eine Speichereinheit zum Speichern eines eigenen Profils des Teilnehmers,
B. eine auf Basis einer drahtlosen, lokal begrenzten Netzwerk-Technologie funktionierende Sende- und Empfangseinheit zum Empfangen (Scannen) von fremden Profilen anderer Teilnehmer eines Kommunikationssystems und zum Senden von eigenen Daten des Teilnehmers,
C. eine Speichereinheit zum Speichern der fremden Profile, die empfangen wurden,
D. eine Korrelationseinheit zum Vergleichen von Profilen untereinander,
E. eine Signalisierungs-/ Synchronisierungseinheit.

Die oben beschriebenen Bestandteile des Moduls können auch mit zunehmender Integration Bestandteile des Kommunikationsgerätes werden. So können beispielsweise die Speichereinheiten in den Speicher des Kommunikationsgerätes integriert werden, die Funktion der Korrelationseinheit durch den Prozessor des Kommunikationsgerätes ausgeführt werden und die Funktion der Signalisierungs- und Synchronisierungseinheit zusätzliche Hardware des Kommunikationsgerätes übernehmen. Kennzeichnend für das in das Kommunikationsgerät voll integrierte Modul ist die LAN-/PAN-Technologie und die spezifische Software zur Realisierung und Steuerung der zusätzlichen Funktionalität.

Das mobile Kommunikationsgerät unterstützt vorzugsweise zellulare Kommunikationsstandards, wie beispielsweise GSM, GPRS, EDGE oder UMTS. Die wichtigsten Komponenten des Kommunikationsgerätes sind die Mobilfunkhard- und Software mit einer Schnittstelle für das Modul und die Eingabeeinheit.

Vorzugsweise handelt es sich bei der Sende- und Empfangseinheit um eine auf Basis von LAN- und/oder PAN-Technologie funktionierende Einheit.

Weiterhin bevorzugt sind die Speichereinheiten ein oder verschiedene für diese Funktion spezifische RAMs. Die Speichereinheiten können ferner auch durch Speichereinheiten der Modulhardware oder der Hardware des Kommunikationsgerätes realisiert werden.

Bei der Korrelationseinheit handelt es sich vorzugsweise um einen Mikrorechner oder DSP (Digital Signal Processor). Die Funktion der Korrelationseinheit kann auch durch die existierende Modulhardware oder die Hardware des Kommunikationsgerätes mit zusätzlicher Software realisiert werden.

Ferner ist die Signalisierungs-/Synchronisierungseinheit vorzugsweise eine softwareunterstützte Schaltung. Diese kann aber auch die Modulhardware oder in die Hardware des Kommunikationsgerätes integriert sein.

Weitere Vorteile der Erfindung werden anhand der folgenden Figuren näher erläutert. Es zeigt
Fig.1 Schematisches Ablaufdiagramm eines Ausführungsbeispiels des erfindungsgemäßen Verfahrens
Fig. 2 Schematische Darstellung einer Ausführungsform eines erfindungsgemäßen Moduls, das in einem mobilen Kommunikationsgerät integriert ist.

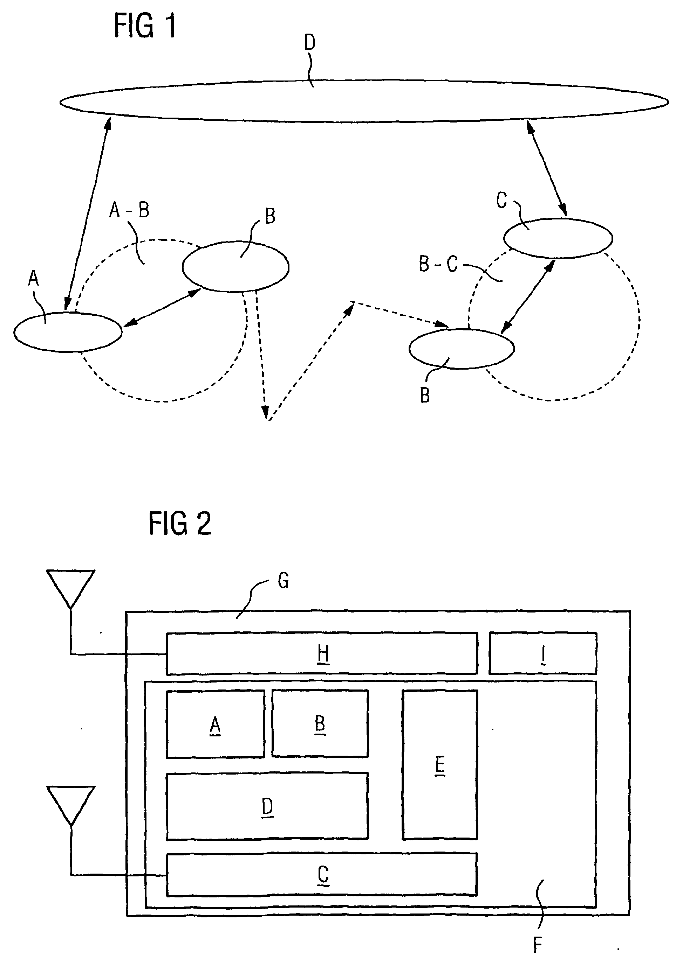

In Figur 1 ist ein schematisches Ablaufdiagramm eines Ausführungsbeispiels des erfindungsgemäßen Verfahrens aufgezeigt. Teilnehmer A und Teilnehmer B gehören zunächst zu einer Teilnehmergruppe AB. Es wird eine ad-hoc Verbindung, beispielsweise mittels Bluetöoth-Technologie zwischen A und B aufgebaut. Ein Profil und eine ID-Nummer von A wird auf B übertragen. Ebenso wird ein Profil und eine ID-Nummer von B auf A übertragen mit nachfolgender Korrelation. Ferner wird das Profil von A im dargestellten Beispiel automatisch im Modul von B gespeichert. Diese Speicherung erfolgt auch bei negativer Korrelation, beispielsweise wenn die Korrelationsschwelle fast erreicht wurde. Damit wird eine Duplizierung des Profils A im Modul von B erwirkt, was die Wahrscheinlichkeit einer späteren positiven Korrelation erhöht. Teilnehmer B dient so als Vermittler von Teilnehmer A. Die Informationen von Profil A werden durch Teilnehmer B weitergetragen. Das Modul von B kontaktiert jedes weitere Modul, das sich in der Funkzelle befindet. Ausgehend von der Annahme, dass der Teilnehmer B in ähnlichen sozialen Gruppen agiert, steigt ebenfalls die Wahrscheinlichkeit einer positiven Korrelation. B wechselt hier von der Gruppe AB zu einer weiteren Gruppe BC. Nach der Identifikation eines weiteren Moduls C in der Gruppe BC wird eine Verbindung zu diesem Modul C aufgebaut und nicht nur das Profil von B und die ID-Nummer von B, sondern auch das Profil von A und dessen ID-Nummer zu C übertragen. Nach dem Empfang der Daten in dem Modul von C findet eine Korrelation der Profile statt, vorteilhafterweise mit Start des Profils von Teilnehmer B. Bei positiver Korrelation des Profils des Teilnehmers B kann vorteilhafterweise die Korrelation des Profils von A abgebrochen werden, um Kollisionen zu verhindern.

Ein Überschreiten einer jeweiligen Korrelationsschwelle wird den entsprechenden Teilnehmern mitgeteilt. Im vorliegenden Fall wird bei Korrelation zwischen B und C sowohl B wie auch C davon unterrichtet. Korreliert B nicht mit C, aber A, so kann dies ebenfalls C mitgeteilt werden. Der Teilnehmer C hat die Möglichkeit durch entsprechende Aktivierung, wie beispielweise durch Drücken einer Taste an der Eingabeeinheit seines Moduls oder des Kommunikationsgerätes, den Wunsch nach Aufbau einer Kommunikationsverbindung zu äußern. Teilnehmer B wird vorteilhaft akustisch oder optisch erkenntlich gemacht, dass es sich bei der Korrelation um eine Vermittlungsaktion von A und C handelt. Es wird dann automatisch eine GSM Verbindung von A und C zu einem Anbieter D des Kommunikationssystems aufgebaut. Äußern nach dem beschriebenen Algorithmus der Teilnehmer A und der Teilnehmer C innerhalb eines festgesetzten Zeitfensters den Wunsch nach einer Vermittlung, so wird seitens des Anbieters D dem Teilnehmer A eine temporäre Telefonnummer von Teilnehmer C und dem Teilnehmer C eine temporäre Telefonnummer von Teilnehmer A zugeordnet. Diese Telefonnummern werden den Teilnehmern entsprechend zugeordnet, so dass die Teilnehmer A und C über diese Telefonnummern jeweils Kontakt miteinander aufnehmen können.

Figur 2 zeigt ein Modul F, das in einem mobilen Kommunikationsgerät G integriert ist. Das mobile Kommunikationsgerät G enthält als Komponente die Funkhardware H und Software mit einer Schnittstelle für das Modul F und die Eingabeeinheit I. Das Modul F enthält eine Speichereinheit A zum Speichern des eigenen Profils, eine Speichereinheit B zum Speichern fremder Profile, bzw. Profile anderer Teilnehmer, die übermittelt werden sollen, eine auf Basis einer drahtlosen, lokal begrenzten Netzwerk-Technologie funktionierende Sende- und Empfangseinheit C zum Senden bzw. Empfangen (Scannen) der Profile der Teilnehmer von Kommunikationssystemen, eine Korrelationseinheit D zum Vergleichen von Profilen untereinander und eine Signalisierungs-/Synchronisierungseinheit E.

## Patentansprüche

1. Verfahren zur Vervielfältigung und Verteilung von Informationen zur Identifizierung von Profilen von Teilnehmern eines Kommunikationssystems, bei dem
a. die Teilnehmer (A, B) teilnehmerspezifische Profile über je eine Eingabeeinheit in je einem Kommunikationsgerät und/oder in je einem an je ein Kommunikationsgerät gekoppeltes Modul definieren und speichern,
b. mittels des je einen an je eines der Kommunikationsgeräte gekoppeltes Modul auf Basis einer drahtlosen, lokal begrenzten Netzwerk-Technologie Profile anderer Teilnehmer (B, A) des Kommunikationssystems empfangen werden,
c. die empfangenen Profile mit dem in dem jeweiligen Kommunikationsgerät definierten und gespeicherten Profil gemäß einer profilspezifischen Korrelationsschwelle verglichen werden und
d. durch Aktivierung des Teilnehmers des jeweiligen Kommunikationsgeräts die empfangenen Profile des jeweiligen Kommunikationsgerätes gespeichert und gemäß jeweiliger profilspezifischer Korrelationsschwellen untereinander verglichen werden und
e. durch Aktivierung des Teilnehmers des jeweiligen Kommunikationsgeräts die empfangenen Profile des jeweiligen Kommunikationsgerätes gespeichert und bei Ortswechsel des jeweiligen Kommunikationsgerätes und/oder Fortschreiten der Zeit gemäß der jeweiligen profilspezifischen Korrelationsschwellen mit Profilen verglichen werden, die mittels des einen an das jeweilige Kommunikationsgerät gekoppelten Moduls auf Basis einer drahtlosen, lokal begrenzten Netzwerk-Technologie Profile anderer Teilnehmer (B, A) des Kommunikationssystems aufgrund des Ortswechsels und /oder des Fortschreitens der Zeit neu empfangen und gespeichert werden und
f. ein jeweiliges Überschreiten der profilspezifischen Korrelationsschwellen den jeweiligen Teilnehmern der entsprechenden teilnehmerspezifischen Profile mitgeteilt wird,
g. durch Aktivierung des Teilnehmers des jeweiliges Kommunikationsendgeräts die empfangenen und gemäß der jeweiligen profilspezifischen Korrelationsschwellen gespeicherten Profile mittels des einen an das jeweilige Kommunikationsendgerät gekoppelten Moduls auf Basis einer drahtlosen, lokal begrenzten Netzwerk-Technologie an andere Teilnehmer (C) des Kommunikationssystems weitervermittelt werden.

2. Verfahren nach Anspruch 1,
**dadurch gekennzeichnet,**
**dass** Profile anderer Teilnehmer nur temporär in dem Kommunikationsgerät eines Teilnehmers gespeichert werden.

3. Verfahren nach Anspruch 1 oder 2,
**dadurch gekennzeichnet,**
**dass** bei Überschreiten von profilspezifischen Korrelationsschwellen über einen zwischengekoppelten Anbieter des Kommunikationssystems eine Kommunikationsverbindung zwischen den jeweiligen Teilnehmern der entsprechenden teilnehmerspezifischen Profile bei jeweiliger teilnehmerseitiger Aktivierung hergestellt wird.

4. Verfahren nach Anspruch 1, 2 oder 3,
**dadurch gekennzeichnet,**
**dass** als drahtlose, lokal begrenzte Netzwerk-Technologie eine LAN- (local area network) und/oder eine PAN- (personel area network) Technologie, insbesondere Bluetooth, verwendet wird.

5. Verfahren nach Anspruch 1 bis 4,
**dadurch gekennzeichnet,**
**dass** als jeweiliges Kommunikationsgerät jeweils ein mobiles, nach einem Standard funktionierendes Kommunikationsgerät eingesetzt wird, wobei der Standard aus einer Gruppe, bestehend aus: GSM, GPRS EDGE und UMTS, ist.

6. Verfahren nach einem der Ansprüche 1 bis 5,
**dadurch gekennzeichnet,**
**dass** jedem Modul eines Teilnehmers (A, B) eine ID-Nummer zugeordnet wird.

7. Verfahren nach einem der vorhergehenden Ansprüche,
**dadurch gekennzeichnet,**
**dass** als Eingabeeinheit ein Computer verwendet wird.

8. Verfahren nach einem der Ansprüche 3 bis 7,
**dadurch gekennzeichnet,**
**dass** zur Herstellung einer Kommunikationsverbindung zwischen Teilnehmern (A, B) den jeweiligen Teilnehmern (A, B) je eine neutrale Telefonnummer zugewiesen wird.

9. Verfahren nach Anspruch 8,
**dadurch gekennzeichnet,**
**dass** die Zuweisung der neutralen Telefonnummern temporär vorgenommen wird.

10. Modul, das in ein mobiles Kommunikationsgerät eines Teilnehmers integrierbar und/oder an ein mobiles Kommunikationsgerät eines Teilnehmers über eine Schnittstelle ankoppelbar ist und mindestens die folgenden Elemente aufweist:
A. eine Speichereinheit zum Speichern eines eigenen Profils des Teilnehmers,
B. eine auf Basis einer drahtlosen, lokal begrenzten Netzwerk-Technologie funktionierende Sende- und Empfangseinheit zum Senden und Empfangen (Scannen) von fremden Profilen anderer Teilnehmern (A, B) eines Kommunikationssystems,
C. eine Speichereinheit zum Speichern der fremden Profile, die empfangen wurden und die an andere Teilnehmer weitervermittelt werden sollen,
D. eine Korrelationseinheit zum Vergleichen von Profilen untereinander,
E. eine Signalisierungs-/ Synchronisierungseinheit,

11. Modul nach Anspruch 10,
**dadurch gekennzeichnet,**
**dass** die Sende- und Empfangseinheit eine auf Basis von LAN- und/oder PAN-Technologie funktionierende Einheit ist.

12. Modul nach Anspruch 10 oder 11,
**dadurch gekennzeichnet,**
**dass** die Speichereinheiten ein oder verschiedene für diese Funktion spezifische RAMs sind.

13. Modul nach einem der Ansprüche 10 bis 12,
**dadurch gekennzeichnet,**
**dass** die Korrelationseinheit ein Mikrorechner ist.

14. Modul nach einem der Ansprüche 10 bis 13,
**dadurch gekennzeichnet,**
**dass** die Signalisierungs-/Synchronisierungseinheit eine softwareunterstützte Schaltung ist.

## Claims

1. Method for replicating and distributing information for identifying profiles of subscribers in a communication system, in which
a. the subscribers (A, B) define and store subscriber-specific profiles using a respective input unit in a respective communication appliance and/or in a respective module coupled to a respective communication appliance,
b. the respective module coupled to a respective one of the communication appliances is used to receive profiles from other subscribers (B, A) in the communication system on the basis of wireless, locally limited network technology,
c. the profiles received are compared with the profile which is defined and stored in the respective communication appliance in line with a profile-specific correlation threshold, and
d. activation by the subscriber on the respective communication appliance stores the received profiles of the respective communication appliance and compares them with one another in line with respective profile-specific correlation thresholds, and
e. activation by the subscriber on the respective communication appliance stores the received profiles of the respective communication appliance and, in the event of a change of location of the respective communication appliance and/or as time progresses, compares them, in line with the respective profile-specific correlation thresholds, with profiles which are newly received and stored on the basis of wireless, locally limited network technology profiles of other subscribes (B, A) the communications system using the module coupled to the respective communication appliance on account of the change of location and/or the progression of time, and
f. a respective instance of the profile-specific correlation thresholds being exceeded is communicated to the respective subscribers having the corresponding subscriber-specific profiles,
g. activation by the subscriber on the respective communication terminal forwards the received profiles, which are stored in line with the respective profile-specific correlation thresholds, to other subscribers (C) in the communication system on the basis of a wireless, locally limited network technology using the module coupled to the respective communication terminal.

2. Method according to Claim 1,
**characterized**
**in that** profiles of other subscribers are stored only temporarily in a subscriber's communication appliance.

3. Method according to Claim 1 or 2,
**characterized**
**in that** when profile-specific correlation thresholds are exceeded an interposed provider of the communication system is used to set up a communication connection between the respective subscribers having the corresponding subscriber-specific profiles upon respective activation by the subscribers.

4. Method according to Claim 1, 2 or 3,
**characterized**
**in that** the wireless, locally limited network technology used is LAN (local area network) and/or PAN (personal area network) technology, particularly Bluetooth.

5. Method according to Claims 1 to 4,
**characterized**
**in that** the respective communication appliance used is a respective mobile communication appliance operating on the basis of a standard, the standard being from a group comprising: GSM, GPRS EDGE and UMTS.

6. Method according to one of Claims 1 to 5,
**characterized**
**in that** each module associated with a subscriber (A, B) is assigned an ID number.

7. Method according to one of the preceding claims,
**characterized**
**in that** the input unit used is a computer.

8. Method according to one of Claims 3 to 7,
**characterized**
**in that** a communication connection is set up between subscribers (A, B) by assigning the respective subscribers (A, B) a respective neutral telephone number.

9. Method according to Claim 8,
**characterized**
**in that** the neutral telephone numbers are assigned on a temporary basis.

10. Module which can be integrated into a mobile communication appliance associated with a subscriber and/or can be coupled to a mobile communication appliance associated with a subscriber via an interface and has at least the following elements:
A. a memory unit for storing a profile of the subscriber himself,
B. a transmission and reception unit, operating on the basis of wireless, locally limited network technology, for transmitting and receiving (scanning) foreign profiles from other subscribers (A, B) in a communication system,
C. a memory unit for storing the foreign profiles which have been received and which are to be forwarded to other subscribers,
D. a correlation unit for comparing profiles with one another,
E. a signalling/synchronization unit.

11. Module according to Claim 10,
**characterized**
**in that** the transmission and reception unit is a unit operating on the basis of LAN and/or PAN technology.

12. Module according to Claim 10 or 11,
**characterized**
**in that** the memory units are a or various RAM(s) specific to this function.

13. Module according to one of Claims 10 to 12,
**characterized**
**in that** the correlation unit is a microcomputer.

14. Module according to one of Claims 10 to 13,
**characterized**
**in that** the signalling/synchronization unit is a software-assisted circuit.

## Revendications

1. Procédé de reproduction et de répartition d'informations pour l'identification de profils d'abonnés d'un système de communication, dans lequel
a. les abonnés (A, B) définissent et mémorisent des profils spécifiques à l'abonné à chaque fois par l'intermédiaire d'une unité d'entrée respective dans un appareil de communication respectif et/ou dans un module respectif couplé à un appareil de communication respectif,
b. au moyen d'un module respectif couplé à l'un des appareils de communication respectifs, des profils d'autres utilisateurs (B, A) du système de communication sont reçus sur la base d'une technologie de réseau sans fil limitée localement,
c. les profils reçus sont comparés au profil défini et mémorisé dans l'appareil de communication respectif selon un seuil de corrélation spécifique au profil,
d. par l'activation de l'abonné de l'appareil de communication respectif, les profils reçus de l'appareil de communication respectif sont mémorisés et sont comparés entre eux selon des seuils de corrélation respectifs spécifiques au profil, et
e. par l'activation de l'abonné de l'appareil de communication respectif, les profils reçus de l'appareil de communication respectif sont mémorisés et, lorsque la localisation de l'appareil de communication respectif change et/ou lorsque le temps passe, ils sont comparés selon les seuils de corrélation respectifs spécifiques au profil à des profils qui sont à nouveau reçus et mémorisés au moyen du module couplé à l'appareil de communication respectif sur la base d'une technologie de réseau sans fil limitée localement en raison du changement de la localisation et/ou de l'écoulement du temps, et
f. un dépassement respectif des seuils de corrélation spécifiques au profil est communiqué aux abonnés respectifs des profils correspondants spécifiques à l'abonné,
g. par l'activation de l'abonné du terminal de communication respectif, les profils reçus et mémorisés selon les seuils de corrélation respectifs spécifiques au profil sont retransmis à d'autres abonnés (C) du système de communication au moyen du module couplé au terminal de communication respectif sur la base d'une technologie de réseau sans fil limitée localement.

2. Procédé selon la revendication 1,
**caractérisé par le fait que** des profils d'autres abonnés ne sont mémorisés que temporairement dans l'appareil de communication d'un abonné.

3. Procédé selon la revendication 1 ou 2,
**caractérisé par le fait que**, lors du dépassement de seuils de corrélation spécifiques au profil, une liaison de communication entre les abonnés respectifs des profils correspondants spécifiques à l'abonné est établie par l'intermédiaire d'un fournisseur intercalé du système de communication lors de l'activation respective du côté de l'abonné.

4. Procédé selon la revendication 1, 2 ou 3,
**caractérisé par le fait qu'**on utilise comme technologie de réseau sans fil limitée localement une technologie LAN (local area network) et/ou une technologie PAN (personal area network), notamment Bluetooth.

5. Procédé selon l'une des revendications 1 à 4,
**caractérisé par le fait qu'**on utilise comme appareil de communication respectif un appareil de communication fonctionnant selon un certain standard, le standard faisant partie d'un groupe constitué de : GSM, GPRS EDGE et UMTS.

6. Procédé selon l'une des revendications 1 à 5,
**caractérisé par le fait qu'**on associe à chaque module d'un abonné (A, B) un numéro d'identification ID.

7. Procédé selon l'une des revendications précédentes,
**caractérisé par le fait qu'**on utilise comme unité d'entrée un ordinateur.

8. Procédé selon l'une des revendications 3 à 7,
**caractérisé par le fait que**, pour établir une liaison de communication entre des abonnés (A, B), on attribue aux abonnés respectifs (A, B) à chaque fois un numéro de téléphone neutre.

9. Procédé selon la revendication 8,
**caractérisé par le fait que** l'attribution des numéros de téléphone neutres est effectuée temporairement.

10. Module, qui est intégrable dans un appareil de communication mobile et/ou raccordable à un appareil de communication mobile d'un abonné par l'intermédiaire d'une interface et qui comporte au moins les éléments suivants :
A. une unité de mémorisation pour mémoriser un profil particulier de l'abonné,
B. une unité d'émission et de réception fonctionnant sur la base d'une technologie de réseau sans fil limitée localement pour émettre et recèvoir (balayer) des profils étrangers d'autres utilisateurs (A, B) d'un système de communication,
C. une unité de mémorisation pour mémoriser les profils étrangers qui ont été reçus et qui doivent être retransmis à d'autres abonnés,
D. une unité de corrélation pour comparer des profils entre eux,
E. une unité de signalisation / synchronisation.

11. Module selon la revendication 10,
**caractérisé par le fait que** l'unité d'émission et de réception est une unité fonctionnant sur la base d'une technologie LAN et/ou PAN.

12. Module selon la revendication 10 ou 11,
**caractérisé par le fait que** les unités de mémorisation sont une ou différentes mémoires vives ou RAM spécifiques à cette fonction.

13. Module selon l'une des revendications 10 à 12,
**caractérisé par le fait que** l'unité de corrélation est un micro-ordinateur.

14. Module selon l'une des revendications 10 à 13,
**caractérisé par le fait que** l'unité de signalisation / synchronisation est un circuit assisté par logiciel.
